# EUROPEAN PATENT APPLICATION

(11) **EP 4 538 945 A1**
(43) Date of publication of application: **16.04.2025**
(21) Application number: 23819189.4
(22) Date of filing: 07.06.2023
(51) Int. Cl.: G06Q 10/10

(54) **DOCUMENT COLLABORATION METHOD AND DEVICE AND STORAGE MEDIUM**

(30) Priority: 10.06.2022 CN 202210657172
(71) Applicant: Zhuhai Kingsoft Office Software Co., Ltd., Zhuhai, Guangdong 519080 (CN); Beijing Kingsoft Office Software, Inc., Beijing 100085 (CN); Wuhan Kingsoft Office Software Co., Ltd., Wuhan, Hubei 430075 (CN)
(72) Inventor: GE, Xiazhi, Zhuhai, Guangdong 519080 (CN); HUANG, Zhanlin, Zhuhai, Guangdong 519080 (CN)
(74) Representative: Botti & Ferrari S.p.A.
(86) International application number: PCT/CN2023/098981
(87) International publication number: WO 2023/237024

(57) **Abstract**

Embodiments of the disclosure relate to a method and an apparatus for document collaboration, and a storage medium. The method includes: acquiring a target document, the target document including a document area; creating a collaboration space for the document area; and generating an edited document of the target document based on first editing information of the collaboration space, the first editing information being determined through the collaboration space. With the solutions, the collaboration space can be used to generate the edited document of the target document, which contributes to improving efficiency in document collaborative editing and generation.

## Description

### Cross-Reference To Related Applications

The present disclosure claims priority of the Chinese patent application No. 202210657172.0 entitled "METHOD AND APPARATUS FOR DOCUMENT COLLABORATION, AND STORAGE MEDIUM" filed before China National Intellectual Property Administration on June 10, 2022, which is incorporated herein by reference in its entirety.

### Field

Embodiments of the disclosure relate to the technical field of computers, in particular to a method and an apparatus for document collaboration, and a storage medium.

### Background

Some document collaboration functions support joint editing of a same document by a plurality of persons, and a historical version of the document is visible to all collaborators.

In real work and life, different parts of a document may be edited by different teams, or some of data may need to be masked to different teams.

In the above scenarios, many draft versions may need to be created for a document before the document can be finalized. In multiuser collaboration, all of the draft versions are visible to all of the users, which results in repeated editing of a same document area for many times and low efficiency in document collaboration editing and generation.

### Summary

In view of this, in order to solve some or all of the above technical problems, embodiments of the present disclosure provide a method and a device for document collaboration and a storage medium.

In a first aspect, an embodiment of the disclosure provides a method for document collaboration, including:
acquiring a target document, the target document including a document area;
creating a collaboration space for the document area; and
generating an edited document of the target document based on first editing information of the collaboration space, the first editing information being determined through the collaboration space.

In a method of an embodiment of the present disclosure, the creating a collaboration space for the document area includes:
establishing an association relationship between the document area and a first user to create the collaboration space for the document area, the first user having operation permission on the document area.

In a method of an embodiment of the present disclosure, the operation permission includes first editing permission to edit the document area through the collaboration space, and the first editing information is information generated by the first user through the first editing permission.

In a method of an embodiment of the present disclosure, the generating an edited document of the target document based on first editing information of the collaboration space includes:
obtaining content of the document area in the target document based on the first editing information in a case where first confirmation operation on the first editing information is detected.

In a method of an embodiment of the present disclosure, the document area includes a sub-area; and the method further includes: after the creating the collaboration space for the document area,
creating a sub-space for the sub-area; and
determining the first editing information of the collaboration space based on second editing information of the sub-space, the second editing information being determined through the sub-space.

In a method of an embodiment of the present disclosure, the creating a sub-space for the sub-area includes:
establishing an association relationship between the sub-area and a second user to create the sub-space for the sub-area, in which the second user has read-only permission or second editing permission on the sub-area, and the second editing permission is permission to edit the sub-area through the sub-space; and
the second editing information is information generated by the second user through the second editing permission in a case where the second user has the second editing permission.

In a method of an embodiment of the present disclosure, the determining the first editing information of the collaboration space based on the second editing information of the sub-space includes:
obtaining content of the sub-area in the collaboration space based on the second editing information in a case where second confirmation operation on the second editing information is detected.

In a method of an embodiment of the present disclosure, the method further includes: after the creating the collaboration space for the document area,
creating a parallel space for the document area; and
the generating the edited document of the target document based on the first editing information of the collaboration space includes: generating the edited document of the target document based on the first editing information of the collaboration space and third editing information of the parallel space, the third editing information being determined through the parallel space.

In a method of an embodiment of the present disclosure, the creating a parallel space for the document area includes:
establishing an association relationship between the document area and a third user to create the parallel space for the document area.

In a method of an embodiment of the present disclosure, in a case where the creating the collaboration space for the document area includes establishing an association relationship between the document area and a first user, the third user and the first user creating the parallel space corresponding to the third user have the same permission on the document area, and the same permission is read-only permission or first editing permission.

In a method of an embodiment of the present disclosure, the generating the edited document of the target document based on the first editing information of the collaboration space and third editing information of the parallel space includes:
obtaining first content of the document area in the target document based on the first editing information in a case where first confirmation operation on the first editing information is detected;
obtaining second content of the document area in the target document based on the third editing information in a case where third confirmation operation on the third editing information is detected; and
generating the edited document of the target document according to the first content and the second content.

In a method of an embodiment of the present disclosure, the method further includes:
switching content displayed through the collaboration space to obtained content of the document area in the target document.

In a method of an embodiment of the present disclosure, the method further includes:
displaying target content in a case where a consulting request is detected and a user initiating the consulting request has read-only permission, in which:
in a case where the consulting request indicates consulting content of the document area corresponding to the collaboration space, the target content is the content of the document area corresponding to the collaboration space;
in a case where the consulting request indicates consulting content of a sub-area corresponding to a sub-space, the target content is the content of the sub-area corresponding to the sub-space; and
in a case where the consulting request indicates consulting content of a document area corresponding to a parallel space, the target content is the content of the document area corresponding to the parallel space.

In a method of an embodiment of the present disclosure, the method further includes:
in a case where selection operation on the document area in the target document is detected, determining historical versions of the document area selected by the selection operation and marking differences between the historical versions, each of the historical versions including first editing information, second editing information, third editing information and pre-editing information of the document area; and
displaying the historical versions and the differences.

In a method of an embodiment of the present disclosure, the generating an edited document of the target document includes:
in a case where there is an intersection area between at least two document areas corresponding to at least two collaboration spaces, determining the number of target collaboration spaces where a content segment of the intersection area is edited;
in a case where the number is one, determining the content segment edited through the target collaboration space as content of the edited document of the target document; and
in a case where the number is greater than one, determining the content segment selected by a user creating the target collaboration spaces and edited through a single target collaboration space as content of the edited document of the target document.

In a second aspect, an embodiment of the disclosure provides an apparatus for document collaboration, which includes:
an acquisition unit configured to acquire a target document, the target document including a document area;
a first creating unit configured to create a collaboration space for the document area; and
a generation unit configured to generate an edited document of the target document based on first editing information of the collaboration space, the first editing information being determined through the collaboration space.

In an apparatus of an embodiment of the present disclosure, the first creating unit is configured to:
establish an association relationship between the document area and a first user to create the collaboration space for the document area, the first user having operation permission on the document area.

In an apparatus of an embodiment of the present disclosure, the operation permission includes first editing permission to edit the document area through the collaboration space, and the first editing information is information generated by the first user through the first editing permission.

In an apparatus of an embodiment of the present disclosure, the generation unit is configured to:
obtain content of the document area in the target document based on the first editing information in a case where first confirmation operation on the first editing information is detected.

In an apparatus of an embodiment of the present disclosure, the document area includes a sub-area; and
the apparatus further includes:
a second creating unit configured to create a sub-space for the sub-area; and
a first determination unit configured to determine the first editing information of the collaboration space based on second editing information of the sub-space, the second editing information being determined through the sub-space.

In an apparatus of an embodiment of the present disclosure, the second creating unit is configured to:
establish an association relationship between the sub-area and a second user to create the sub-space for the sub-area, in which the second user has read-only permission or second editing permission on the sub-area, and the second editing permission is permission to edit the sub-area through the sub-space; and
the second editing information is information generated by the second user through the second editing permission in a case where the second user has the second editing permission.

In an apparatus of an embodiment of the present disclosure, the first determination unit is configured to:
obtain content of the sub-area in the collaboration space based on the second editing information in a case where second confirmation operation on the second editing information is detected.

In an apparatus of an embodiment of the present disclosure, the apparatus further includes:
a third creating unit configured to create a parallel space for the document area; and
the generation unit is configured to:
   generate the edited document of the target document based on the first editing information of the collaboration space and third editing information of the parallel space, the third editing information being determined through the parallel space.

In an apparatus of an embodiment of the present disclosure, the third creating unit is configured to:
establish an association relationship between the document area and a third user to create the parallel space for the document area.

In an apparatus of an embodiment of the present disclosure, in a case where the creating the collaboration space for the document area includes establishing an association relationship between the document area and a first user, the third user and the first user creating the parallel space corresponding to the third user have the same permission on the document area, and the same permission is read-only permission or first editing permission.

In an apparatus of an embodiment of the present disclosure, the generation unit is configured to:
obtain first content of the document area in the target document based on the first editing information in a case where first confirmation operation on the first editing information is detected;
obtain second content of the document area in the target document based on the third editing information in a case where third confirmation operation on the third editing information is detected; and
generate the edited document of the target document according to the first content and the second content.

In an apparatus of an embodiment of the present disclosure, the apparatus further includes:
an adjusting unit configured to switch content displayed through the collaboration space to obtained content of the document area in the target document.

In an apparatus of an embodiment of the present disclosure, the apparatus further includes:
a first display unit configured to display target content in a case where a consulting request is detected and a user initiating the consulting request has read-only permission, in which:
in a case where the consulting request indicates consulting content of the document area corresponding to the collaboration space, the target content is the content of the document area corresponding to the collaboration space;
in a case where the consulting request indicates consulting content of a sub-area corresponding to the sub-space, the target content is the content of the sub-area corresponding to the sub-space; and
in a case where the consulting request indicates consulting content of a document area corresponding to a parallel space, the target content is the content of the document area corresponding to the parallel space.

In an apparatus of an embodiment of the present disclosure, the apparatus further includes:
a second determination unit configured to determine historical versions of the document area selected by the selection operation and mark differences between the historical versions in a case where selection operation on the document area in the target document is detected, each of the historical versions including first editing information, second editing information, third editing information and pre-editing information of the document area; and
a second display unit configured to display the historical versions and the differences.

In an apparatus of an embodiment of the present disclosure, the generation unit is configured to:
in a case where there is an intersection area between at least two document areas corresponding to at least two collaboration spaces, determine the number of target collaboration spaces where a content segment of the intersection area is edited;
in a case where the number is one, determine the content segment edited through the target collaboration space as the content of the edited document of the target document; and
in a case where the number is greater than one, determine the content segment selected by a user creating the target collaboration spaces and edited through a single target collaboration space as the content of the edited document of the target document.

In a third aspect, an embodiment of the disclosure provides an electronic device including:
a memory configured to store a computer program; and
a processor configured to execute the computer program stored in the memory and implement the method in any of embodiments of the method for document collaboration according to the first aspect when the computer program is executed.

In a fourth aspect, an embodiment of the present disclosure provides a computer-readable storage medium with a computer program stored thereon, and when the computer program is executed by a processor, the method in any of embodiments of the method for document collaboration according to the first aspect is implemented.

In a fifth aspect, an embodiment of the present disclosure provides a computer program including computer readable code, and when the computer readable code is executed on a device, a processor in the device executes instructions for implementing steps in the method in any of embodiments of the method for document collaboration according to the first aspect.

The method for document collaboration according to the embodiment of the present disclosure includes: acquiring a target document, the target document including a document area; creating a collaboration space for the document area; and generating an edited document of the target document based on first editing information of the collaboration space, the first editing information being determined through the collaboration space. With this method, the collaboration space can be used to generate the edited document of the target document, which contributes to improving efficiency in document collaborative editing and generation.

### Brief Description of the Drawings

FIG. 1A is a flowchart of a method for document collaboration according to an embodiment of the present disclosure;
FIG. 1B is a schematic diagram of an application scenario of FIG. 1A;
FIG. 2 is a flowchart of a method for document collaboration according to another embodiment of the present disclosure;
FIG. 3A is a flowchart of a method for document collaboration according to yet another embodiment of the present disclosure;
FIG. 3B is a schematic diagram of an application scenario of FIG. 3A;
FIG. 4A is a flowchart of a method for document collaboration according to still another embodiment of the present disclosure;
FIG. 4B is a schematic diagram of an application scenario of FIG. 4A;
FIG. 5A is a flowchart of a method for document collaboration according to still another embodiment of the present disclosure;
FIG. 5B is a schematic diagram of an application scenario of FIG. 5A;
FIG. 6 is a structure diagram of an apparatus for document collaboration according to an embodiment of the present disclosure; and
FIG. 7 is a structure diagram of an electronic device according to an embodiment of the present disclosure.

### Detailed Description

Various exemplary embodiments of the present disclosure will now be described in detail with reference to the accompanying drawings. It should be noted that relative arrangement, numerical expressions and numerical values of components and steps set forth in these embodiments do not limit a scope of the disclosure, unless otherwise designated.

It can be understood by those skilled in the art that terms such as "first" and "second" in the embodiments of this disclosure are only used to distinguish different steps, devices, modules or objects, but not represent any specific technical meaning or logical order among them.

It should also be understood that in the embodiments of the present disclosure, "a plurality of" may refer to two or more, and "at least one" may refer to one, two or more.

It should also be understood that any of components, data or structures mentioned in the embodiments of the present disclosure can generally be understood as one or more unless explicitly defined or given contrary enlightenment in the context.

Additionally, a term "and/or" herein is only a kind of relationship describing related objects, which means that there can be three kinds of relationships. For example, A and/or B can indicate three situations, only A, A and B, and only B. In addition, a character "/" herein generally means that contextual objects are in an "or" relationship.

It should also be understood that description of various embodiments in this disclosure focuses on differences between various embodiments, and their same or similar parts can be referred to each other and will not be repeated for brevity.

The following description of at least one exemplary embodiment is merely illustrative in nature and is in no way intended to limit the disclosure and its application or use.

Techniques, methods and devices known to ordinary skilled in relevant art may not be discussed in detail, but in appropriate cases, the techniques, methods and devices should be regarded as a part of the specification.

It should be noted that similar reference numbers and letters indicate similar items in the following figures, and thus once an item is defined in one figure, it is not necessary to be further discussed in the following figures.

It should be noted that the embodiments in the present disclosure and the characteristics in the embodiments can be combined mutually in a case of no conflict. In order to facilitate understanding of the embodiments of the present disclosure, the present disclosure will be described in details with reference to drawings and in combination with embodiments. Obviously, the described embodiments are some, but not all, of the embodiments of the present disclosure. On a basis of the embodiments in this disclosure, all other embodiments obtained by the ordinary skilled in the art without any creative effort are within the protection scope of this disclosure.

It should also be noted that users described in this disclosure (including a first user, a second user, a third user, a user creating a target document, a user creating a collaboration space, a user having permission to edit a target document, etc.) can be distinguished using user identification. For example, the user identification may be a login account. In this scenario, if different persons log in with a same account, they can be considered as the same user. If the same person logs in with different accounts, the same person can be considered as different users.

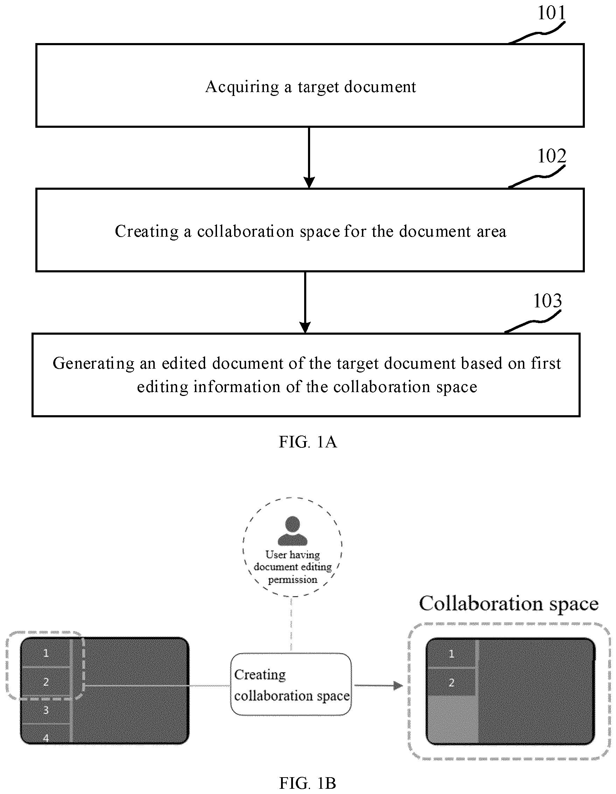

FIG. 1A is a flowchart of a method for document collaboration according to an embodiment of the present disclosure. As shown in FIG. 1A, the method specifically includes steps 101 to 103.

At step 101, a target document is acquired.

In the embodiment of the present disclosure, an execution subject (a server, a terminal device, an apparatus for document collaboration, etc.) of the method for document collaboration can acquire the target document.

The target document includes a document area.

The target document can be any document. As an example, the target document may be a document to be edited. For example, the target document can be in .doc, .docx, .xlsx, .xls, .ppt and other formats. The document area can be all or part of areas in the target document. If the target document is a PPT, the document area can be one or more pages in the PPT, or all or part of areas in one or more slices in the PPT; and if the target document is a picture, then the document area can be a location where text in the picture is located, and an object to be edited of the document area in the picture can be text, color, or the like.

At step 102, a collaboration space for the document area is created.

In this embodiment, the execution subject can create the collaboration space for the document area.

The collaboration space can be a virtual space where content in the document area is edited or read only.

The collaboration space can be created by selecting a document area (document content, document page number, etc.) in the target document by an administrator of the target document (e.g., the user creating the target document). In a process of creating the collaboration space, the user creating the target document can set a first user, so that the first user has at least read-only permission on the document area. In addition, in the process of creating the collaboration space, first editing permission can be set for the first user. The first editing permission is permission to edit all or part of the content in the document area.

In addition, after the collaboration space is formed, an association relationship between the document area and the collaboration space can be modified. For example, after selecting a document area A to form a collaboration space A, a document area B can be selected, and then the collaboration space A can be selected. Specifically, after the document area B is selected, a window can pop up to remind a user of the created collaboration space (including the collaboration space A), so that the user can choose. After the user selects the collaboration space A, both the document area A and the document area B are associated with the collaboration space A. In other words, the first user of the collaboration space A has at least read-only permission to the document area A and the document area B.

By creating the collaboration space, a collaboration mode can be formed to jointly edit the content in the document area, and this collaboration mode can have impact on the content to be edited.

The document area can be edited through collaboration spaces independently of each other, that is, first editing information generated by editing in a single collaboration space is invisible to other first users in the at least one collaboration space except the single collaboration space before being updated to the target document. Therefore, by creating a plurality of collaboration spaces, different permission (such as read-only permission and first editing permission to edit different content in the document area) is set for the first users of the collaboration spaces, so that different first users among the collaboration spaces or in the collaboration spaces can have different first editing permission. The permission among the spaces means that, for example, the first users in different collaboration spaces cannot view and edit content in a collaboration space where they don't have permission across the collaboration spaces; and the permission in the collaboration spaces means that, for example, the first user can only edit a part of the content in the document area (e.g., content of the first sentence), or content edited by the first user can only affect the part of the content.

During selecting the document area, the document area may contain content, or may not contain content, that is, the document area may be empty.

A user who can enter the collaboration space to view the document area may include at least one of: an administrator of the target document (for example, the user creating the target document) and the first user. In addition, in a case where the first user can enter the collaboration space to view the document area, the first user can invite other users to view the document area. Optionally, after entering the collaboration space, the corresponding user may have permission to edit (i.e. the first editing permission) a part or all of the document area in addition to permission to view the document area.

An administrator of the target document (for example, the user creating the target document) may have highest permission on the target document, such as permission to edit and delete the target document and permission to create the collaboration space for the document area in the target document.

In practice, a link can be generated for each collaboration space, and the first user can enter the collaboration space by clicking the link, so as to view (or view and edit) all or part of the content of the target document. Non-first users cannot view (or view and edit) any of the content of the target document by clicking the link. There may be one or more first users (that is, users designated for the collaboration space). Each first editing permission may correspond to an editing range of the document area. Different first users in the same collaboration space have the same permission (such as the read-only permission or the first editing permission).

As an example, the collaboration space of a document A (that is, the target document) includes a collaboration space A and a collaboration space B. A first user of the collaboration space A includes a first user A, a first user B and a first user C. A first user of the collaboration space B includes a first user a and a first user b. First editing permission on the collaboration space A is that a document area A of the document A can be viewed and edited; and permission on the collaboration space B is that a document area B of the document A can be read only (can be viewed only but cannot be edited) (that is, read-only permission).

Thus, in the above example, the first user A, the first user B and the first user C can all view and edit the document area A of the document A; and both the first user a and the first user b can read only (only view but not edit) the document area B of the document A. In addition, any one of the first user A, the first user B and the first user C can edit a copy of the document area A of the document A through the collaboration space A. However, since the edited object is a copy, the content (that is, the first editing information) input by editing the copy of the document area A of the document A in the collaboration space A is invisible to the first user of the collaboration space B (including the first user a and the first user b) before being updated to the document A.

Here, one or more collaboration spaces can be designated.

In some alternative implementations of this embodiment, the execution subject can perform the step 102 in the following way to create the collaboration space for the document area:
establishing an association relationship between the document area and the first user to create the collaboration space for the document area. The first user has operation permission on the document area. The operation permission may include read-only permission or first editing permission.

It can be understood that in the alternative implementations, the first users with different operation permission can independently view or edit the document area of the target document in the collaboration spaces, thus improving efficiency of document collaboration.

At step 103, an edited document of the target document is generated based on first editing information of the collaboration space.

In an embodiment of the present disclosure, the execution subject may generate the edited document of the target document based on the first editing information of the collaboration space.

The first editing information is determined through the collaboration space. Specifically, the first editing information may be words, pictures and other content input by editing the document area of the target document in the collaboration space.

In some alternative implementations of this embodiment, the execution subject can also share part of content of the target document (or the edited document) by creating the collaboration space for the target document (or the edited document).

It can be understood that since the first user in the collaboration space can view part or all of the content of the target document (or the edited document) in the collaboration space, part of the content of the target document (or the edited document) can be shared by creating the collaboration space for the target document, and thus viewed by the first user associated with the collaboration space.

In some alternative implementations of this embodiment, in a case where the collaboration space for the document area is created by establishing the association relationship between the document area and the first user and the first user has operation permission on the document area, the operation permission may include the first editing permission to edit the document area through the collaboration space, and the first editing information is information generated by the first user through the first editing permission.

The first editing permission may be permission to edit all or part of the document area. The first editing information is determined through the collaboration space. For example, the first editing information may be text input by the first user through the collaboration space.

The association relationship can be established in many ways. For example, identification of the collaboration space (such as a name of the collaboration space) can be stored in association with identification of the first user (such as a user account), or identification of the document area can be stored in association with the identification of the first user (such as the user account).

It can be understood that in the above alternative implementations, first users with the same or different first editing permission can collaboratively edit the document area of the target document in the collaboration spaces, thus improving efficiency of document editing.

In some alternative implementations of this embodiment, content displayed through the collaboration space can be switched to obtained content of the document area in the target document.

It can be understood that in the above application scenario, the content displayed through the collaboration space can be switched to the obtained content of the document area in the target document, that is, the content displayed through the collaboration space of the target document changes the same as content in an editing process of the target document. Thus, after editing the target document, sharees can view edited content of the target document without sharing again.

In some alternative implementations of this embodiment, the execution subject may also perform the following step.

Target content is displayed in a case where a consulting request is detected and a user initiating the consulting request has corresponding read-only permission. In a case where the consulting request indicates consulting content of a document area corresponding to the collaboration space, the target content is the content of the document area corresponding to the collaboration space; in a case where the consulting request indicates consulting content of a sub-area corresponding to the sub-space, the target content is the content of the sub-area corresponding to the sub-space; and in a case where the consulting request indicates consulting content of a document area corresponding to the parallel space, the target content is the content of the document area corresponding to the parallel space.

It can be understood that in the above alternative implementations, if a user has read-only permission on the sub-area corresponding to the sub-space, the document area corresponding to the parallel space or the document area corresponding to the collaboration space, corresponding content can be displayed to the user after the user initiates a request, thereby improving security in viewing or collaboratively editing a document.

In some alternative implementations of this embodiment, in a case where selection operation on the document area in the target document is detected (for example, selected operation performed by the user creating the target document), the execution subject may also perform the following steps.

First, historical versions of the document area selected by the selection operation are determined and differences between the historical versions is marked.

Each of the historical versions includes the first editing information, second editing information, third editing information and pre-editing information of the document area.

The historical versions and the difference are displayed.

Here, the differences between the historical versions can be marked by changing their font colors, changing background colors or the like.

It can be understood that in the above alternative implementations, the differences between the historical versions can be directly compared and viewed.

Optionally, the execution subject may also perform the step 103 in the following way.

After the first editing information is obtained, content (such as words, pictures, etc.) contained in the first editing information is directly synchronized to the document area to generate the edited document of the target document.

In some alternative implementations of this embodiment, the execution subject may adopt the following way to generate the edited document of the target document.

First, in a case where there is an intersection area between at least two document areas corresponding to at least two collaboration spaces, the number of target collaboration spaces where a content segment of the intersection area is edited is determined.

Then, in a case where the number is one, the content segment edited through the target collaboration space is determined as the content of the edited document of the target document; and in a case where the number is greater than one, the content segment selected by a user creating the target collaboration spaces and edited through a single target collaboration space are determined as the content of the edited document of the target document.

It can be understood that if there is conflict in document areas being collaboratively edited through a plurality of collaboration spaces, for example, if a section of content has three sentences: a content segment A, a content segment B and a content segment C, a document area corresponding to a collaboration space 1 is for the content segment A and the content segment B, and a document area corresponding to a collaboration space 2 is for the content segment B and the content segment C, then in this scenario, the conflict lies in content of the content segment B. At this time, it can be determined whether there is editing for the content segment B in the collaboration space 1 and whether there is editing for the content segment B in the collaboration space 2. If there is no editing for the content segment B in one of the collaboration space 1 and the collaboration space 2, the content of the edited document can be generated directly through the editing for the content segment B in the other of the collaboration space 1 and the collaboration space 2. If there is the editing for the content segment B in both the collaboration space 1 and the collaboration space 2, users creating the collaboration space 1 and collaboration space 2 (that is, the target collaboration space) are prompted to choose one of content segments B edited in the collaboration space as the content of the edited document.

According to the method for document collaboration according to the embodiment of the present disclosure, the target document is obtained, and the target document includes the document area; then the collaboration space for the document area is created, and finally the edited document of the target document is generated based on first editing information of the collaboration space, and the first editing information is determined through the collaboration space. With this method, the collaboration space can be used to generate the edited document of the target document, which contributes to improving efficiency in document collaborative editing and generation.

As an example, referring to FIG. 1B, which is a schematic diagram of the application scenario of FIG. 1A.

In FIG. 1B, a collaboration space can be created and a collaborator (i.e., the first user) can be designated for the target document.

Here, a user with permission to edit the target document (for example, the user creating the target document, hereinafter referred to as a user with editing permission) can create a collaboration space for the document (that is, the target document), and designate collaborators (that is, the first users) and permission (such as the operation permission) in the collaboration space. For example, a collaborator with the editing permission can participate in viewing and editing of content of the collaboration space (that is, the content displayed in the document area through the collaboration space), a collaborator with the read-only permission can only view the content of the collaboration space. In addition, an area of the target document (that is, the document area) can be designated to create the collaboration space. For example, a page number in PowerPoint, a paragraph of text in a document or a page in a table can be selected, and content editing in the collaboration space can be only made for this designated area.

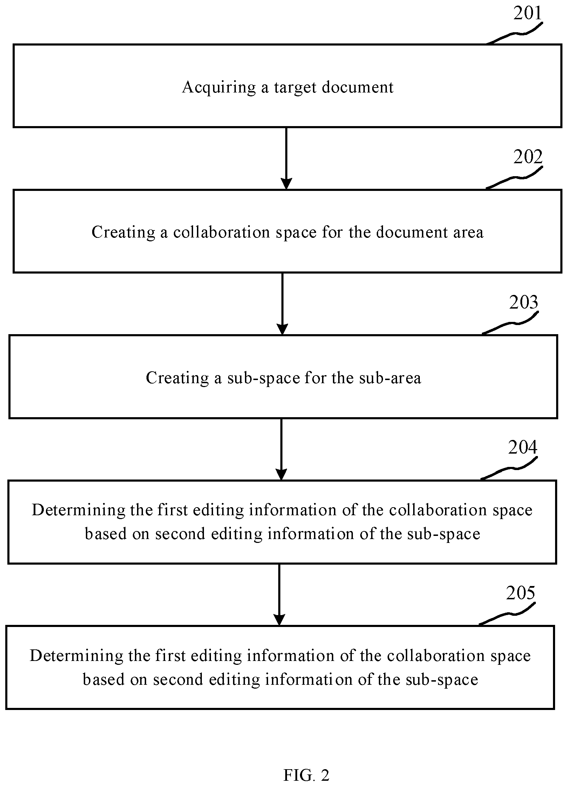

FIG. 2 is a flowchart of a method for document collaboration according to another embodiment of the present disclosure, and the method, as shown in FIG. 2, includes steps 201 to 205.

At step 201, a target document is acquired.

In the embodiment of the present disclosure, an execution subject (a server, a terminal device, an apparatus for document collaboration, etc.) of the method for document collaboration can acquire the target document.

The target document includes a document area. The document area includes a sub-area.

The sub-area can be all or part of the document area.

In the embodiment of the disclosure, the step 201 is substantially the same as the step 101 in the corresponding embodiment of FIG. 1A, which will not be repeated here.

At step 202, a collaboration space for the document area is created.

In the embodiment of the disclosure, the execution subject can create the collaboration space for the document area.

In the embodiment of the disclosure, the step 202 is substantially the same as the step 102 in the corresponding embodiment of FIG. 1A, which will not be repeated here.

At step 203, a sub-space for the sub-area is created.

In the embodiment of the present disclosure, the execution subject may create the sub-space for the sub-area.

The sub-space can be a virtual space where content in the sub-area is edited or read only. The sub-space can be at a lower level than the collaboration space.

The sub-space can be created by the first user through selecting the sub-area (document content, document page number, etc.) in the document area corresponding to the collaboration space. In a process of creating the sub-space, the first user can also set a second user to at least have read-only permission on content of the sub-area. In addition, in the process of creating the sub-space, second editing permission can be set for the second user. The second editing permission is permission to edit all or part of the content in the sub-area.

In addition, after the sub-space is formed, the association relationship between the sub-area and the sub-space can be modified. For example, after selecting a sub-area A to form a sub-space A, a sub-area B can be selected, and then the sub-space A is selected. Specifically, after selecting the sub-area B, a pop-up window can be displayed to remind a user of the created collaboration space and sub-space (including the sub-space A) for the user to choose. After the user selects the sub-space A, both the sub-area A and the sub-area B are associated with the sub-space A. In other words, the second user of the sub-space A has at least read-only permission on the sub-area A and the sub-area B.

By creating the sub-space, a collaboration mode can be formed to jointly edit the content of the sub-area, and this collaboration mode can have effect on content to be edited.

The sub-area can be edited through sub-spaces independently of each other, that is, second editing information generated by editing in a single sub-space is invisible to other second users in the at least one sub-space except the single sub-space before being updated to the document area. Therefore, by creating a plurality of sub-spaces, different permission (such as read-only permission and second editing permission to edit different contents in the document area) are set for a second user in each of the sub-spaces, so that different second users can have different second editing permission among the sub-spaces or in the sub-spaces. The permission among the spaces means that, for example, the second users in different sub-spaces cannot view and edit content in a sub-space that they don't have permission over across the sub-spaces; and the permission in the sub-spaces means that, for example, the second user can only edit a part of the content in the sub-area (such as content of a first sentence), or content edited by the second user can only affect the part of the content.

During selecting the sub-area, the sub-area may contain content, or may not contain content, that is, the sub-area may be empty.

A user who can enter the sub-space to view content of the sub-area may include at least one of: an administrator of the target document, the first user and the second user. In addition, in a case where the second user can enter the sub-space to view content of the sub-area, the second user can also invite other users to view the sub-area. Optionally, after entering the sub-space, a corresponding user may have permission to edit (i.e. the second editing permission) a part or all of the sub-area in addition to view the sub-area.

An administrator of the target document (for example, the user creating the target document) may have highest permission on the target document, such as permission to edit and delete the target document and permission to create the sub-space for the sub-area in the target document.

In practice, a link can be generated for each sub-space, and the second user can enter the sub-space by clicking the link, so as to view (or view and edit) all or part of the content of the sub-area. Non-second users cannot view (or view and edit) any of the content of the sub-area by clicking the link. There may be one or more second users (that is, users designated for the collaboration space). Each second editing permission may correspond to an editing range of the sub-area. Different second users in the same sub-space have the same permission (such as the read-only permission or the second editing permission).

As an example, the sub-space includes a sub-space A and a sub-space B. A second user of the sub-space A includes a second user A, a second user B and a second user C; and a second user of the sub-space B includes a second user a and a second user b. Second editing permission on the sub-space A is that the sub-area A can be viewed and edited; and permission on this sub-space B is that the sub-area B can be read only (can be viewed only but cannot be edited) (that is, read-only permission).

Thus, in the above example, the second user A, the second user B and the second user C can all view and edit the sub-area A; and both the second user a and the second user b can read only (only view but not edit) the sub-area B. In addition, any one of the second user A, the second user B and the second user C can edit a copy of the sub-area A in the sub-space A. However, since an edited object is the copy, content (that is, the second editing information) input by editing the copy of the sub-area A in the sub-space A is not visible to the second user of the sub-space B (including the second user a and the second user b) before being updated to the document area.

Here, one or more sub-spaces can be designated.

It can be understood that the second editing permission is a proper subset of the first editing permission. For example, if the first editing permission is editing permission on the document area A, the document area B and a document area C of the target document. The second editing permission may involve: editing permission on the document area B and the document area C of the target document; or editing permission on the document area A of the target document. The second editing permission cannot involve editing permission on a document area D of the target document.

It should be understood that the collaboration space and the sub-space are relative to each other. The second user of the sub-space can also continue to create a sub-space of this sub-space. For a relationship between the sub-space B of the sub-space A and the sub-space A, reference can be made to the relationship between the sub-space A and the collaboration space, which will not be described here.

In some alternative implementations of this embodiment, the execution subject can perform the step 203 in the following way to create the sub-space for the sub-area.

First, the association relationship between the sub-area and the second user is established to create the sub-space for the sub-area.

The second user has read-only permission or second editing permission on the sub-area, and the second editing permission is permission to edit the sub-area through the sub-space. In addition, the second editing information is information generated by the second user through the second editing permission in a case where the second user has the second editing permission.

The association relationship can be established in many ways. For example, identification of the sub-space (such as a name of the sub-space) can be stored in association with identification of the second user (such as a user account), or identification of the sub-area can be stored in association with the identification of the second user (such as the user account).

It can be understood that in the alternative implementations, the sub-space is created by establishing the association relationship between the sub-area and the second user, and in this way, second users with different operation permission (that is, read-only permission or second editing permission) can independently view or edit the sub-areas corresponding to the sub-spaces, thus improving efficiency of document collaboration.

At step 204, the first editing information of the collaboration space is determined based on second editing information of the sub-space.

In the embodiment of the present disclosure, the execution subject may determine the first editing information of the collaboration space based on the second editing information of the sub-space.

The second editing information is determined through the sub-space.

In some alternative implementations of this embodiment, the execution subject may perform the step 204 in the following way.

Content of the sub-area in the collaboration space is obtained based on the second editing information in a case where second confirmation operation on the second editing information is detected.

The second confirmation operation can indicate that the user (such as the first user) is allowed to update the second editing information in a corresponding document area.

It can be understood that in the alternative implementations, the content displayed through the collaboration space can be adjusted by content in the sub-area, that is, the content displayed through the collaboration space of the target document changes the same as content in the sub-space.

Optionally, the execution subject may also perform the step 203 in the following way.

After the second editing information is obtained, content (such as words and pictures) contained in the second editing information is directly synchronized to the document area.

At step 205, an edited document of the target document is generated based on first editing information of the collaboration space.

In an embodiment of the present disclosure, the execution subject may generate the edited document of the target document based on the first editing information of the collaboration space.

The first editing information is determined through the collaboration space.

In the embodiment of the disclosure, the step 205 is substantially the same as the step 103 in the corresponding embodiment of FIG. 1A, which will not be repeated here.

According to the method for document collaboration provided in the embodiment of the present disclosure, the edited document of the target document is generated based on the second editing information of the sub-space by creating the sub-space for the sub-area, and thus the collaboration space can be used to generate the edited document of the target document, which contributes to improving efficiency in document collaborative editing and generation.

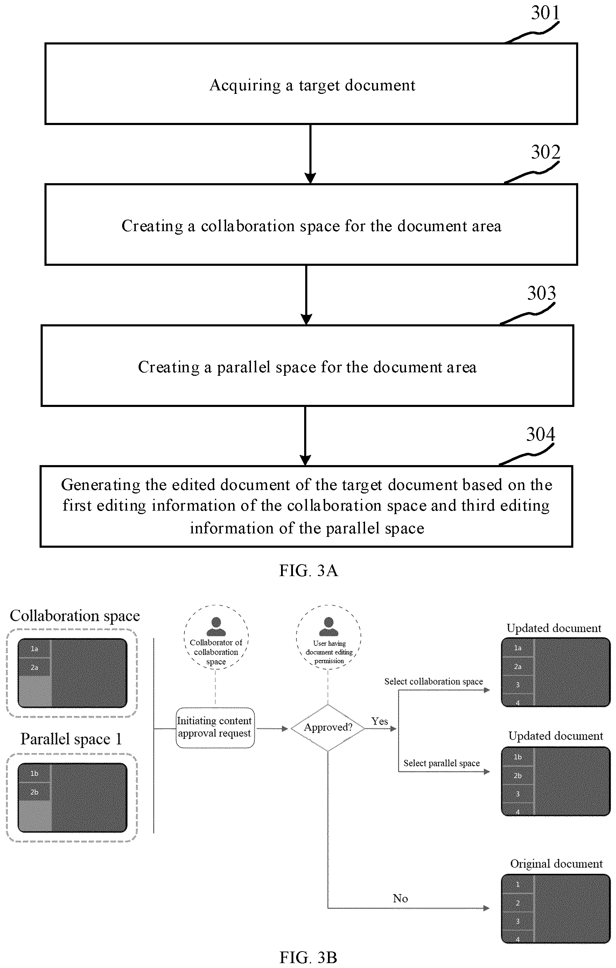

FIG. 3A is a flowchart of a method for document collaboration according to yet another embodiment of the present disclosure, which can be applied to electronic devices such as smart phones, notebook computers, desktop computers and portable computers.

Specifically, as shown in FIG. 3A, the method specifically includes steps 301 to 304.

At step 301, a target document is acquired.

In the embodiment of the present disclosure, an execution subject (a server, a terminal device, an apparatus for document collaboration, etc.) of the method for document collaboration can acquire the target document.

The target document includes a document area.

In the embodiment of the disclosure, the step 301 is substantially the same as the step 101 in the corresponding embodiment of FIG. 1A, which will not be repeated here.

At step 302, a collaboration space for the document area is created.

In the embodiment of the disclosure, the execution subject can create the collaboration space for the document area.

In the embodiment of the disclosure, the step 302 is substantially the same as the step 102 in the corresponding embodiment of FIG. 1A, which will not be repeated here.

At step 303, a parallel space for the document area is created.

In the embodiment of the disclosure, the execution subject can create the parallel space for the document area.

The parallel space can be a virtual space where content in the document area is edited or read only.

The parallel space can be regarded as another collaboration space different from the collaboration space described in step 302. Difference between the parallel space and the collaboration space lies in different users having operation permission on them. Specifically, a user having operation permission on the collaboration space is the first user, and a user having operation permission on the parallel space is the third user.

The parallel space can be created by selecting a document area (such as document content, document page number, etc.) in the target document by an administrator of the target document (such as the user creating the target document), or can be created by the first user. In a process of creating the parallel space, the user creating the target document or the first user can also set a third user, so that the third user has at least read-only permission on the document area. In addition, in the process of creating the parallel space, the third user and the first user creating the parallel space corresponding to the third user can have the same permission (such as read-only permission and first editing permission).

By creating the parallel space, a collaboration mode can be formed to jointly edit the content of this document area, and this collaboration mode can have impact on content to be edited.

The document area can be edited through the parallel spaces independently of each other, that is, editing information generated by editing in a single parallel space is invisible to users (such as the first user, the second user and the third user) in other spaces in the at least one parallel space except the single collaboration space before being updated to the target document. Therefore, by creating a plurality of parallel spaces, the same permission as the first user can be set for the third user in each parallel space.

During selecting the document area, the document area may contain content, or may not contain content, that is, the document area may be empty.

A user who can enter the parallel space to view the document area may include at least one of: an administrator of the target document, the first user and the third user. In addition, in a case where the third user can enter the parallel space to view the document area, the third user can also invite other users to view the document area.

In practice, a link can be generated for each parallel space, and the third user can enter the parallel space by clicking the link, so as to view (or view and edit) all or part of the content of the target document. Non-third users cannot view (or view and edit) any of the content of the target document through the parallel space by clicking the link. There may be one or more third users.

As an example, a parallel space of a document A (that is, the target document) includes a parallel space A and a parallel space B. A third user of the parallel space A include a third user A, a third user B and a third user C; and a third user of the parallel space B include a third user a and a third user b. First editing permission on the parallel space A (that is, operation permission of the third user A, the third user B and the third user C) is that a document area A of the document A can be viewed and edited; and permission on the parallel space B (that is, permission of the third user a and the third user b) is that a document area B of the document A can be read only (can be only viewed but not edited) (that is, read-only permission).

In addition, third users in the same parallel space may have the same operation permission, and third users in different parallel spaces may have different operation permission. In the above example, the third user A, the third user B and the third user C may have the same operation permission, and the third user a and the third user b may have different operation permission. For example, operation permission of the third user A, the third user B, and the third user C is that the document area A of the document A can be viewed and edited; and permission of the third user a and the third user b is that the document area B of the document A can be read only (can be only viewed but not edited).

Thus, in the above example, the third user A, the third user B and the third user C can all view and edit the document area A of the document A; and the third user a and the third user b can both read only (only view but not edit) the document area B of the document A. In addition, any of the third user A, the third user B and the third user C can edit a copy of the document area A of the document A in the parallel space A. However, since an edited object is a copy, content (i.e., the third editing information) input by editing the copy of the document area A of the document A in the parallel space A is not visible to the third user of the parallel space B (including the third user a and the third user b) before being updated to the document A or the collaboration space.

Here, one or more parallel spaces can be designated.

In addition, the third user and the first user creating the parallel space corresponding to the third user can have the same permission. For example, the first user A creates the parallel space A, and a third user of the parallel space A is the third user A; and the first user B creates the parallel space B, and a third user of the parallel space B is the third user B. In the above scenario, the third user A and the first user A have the same operation permission, and the third user B and the first user B have the same operation permission.

In some alternative implementations of this embodiment, the execution subject may perform the step 303 in the following way.

An association relationship between the document area and a third user is established to create the parallel space for the document area.

The association relationship can be established in many ways. For example, identification of the parallel space (such as a name of the parallel space) can be stored in association with identification of the third user (such as a user account), or identification of the document area can be stored in association with the identification of the third user (such as the user account).

It can be understood that in the above alternative implementation, the parallel space for the document area is created by establishing the association relationship between the document area and the third user, and thus the third user can view or edit the document area of the target document in the parallel space, thereby further improving the efficiency of document collaboration.

In some application scenarios in the alternative implementations, in a case where the creating the collaboration space for the document area includes the establishing the association relationship between the document area and the first user, the third user and the first user creating the parallel space corresponding to the third user have the same permission on the document area. The same permission is the read-only permission or the first editing permission.

It can be understood that in the above application scenario, the first user and the third user can have the same permission on the document area, so that a plurality of users can independently operate the same document area, thereby generating a plurality of editing schemes for the same document area, so as to subsequently select therefrom and generate the edited document, thereby improving the efficiency of document collaboration.

At step 304, the edited document of the target document is generated based on the first editing information of the collaboration space and third editing information of the parallel space.

In the embodiment of the present disclosure, the executing agent may generate the edited document of the target document based on the first editing information of the collaboration space and the third editing information of the parallel space.

The third editing information is determined through the parallel space.

In some alternative implementations of this embodiment, the execution subject may perform the step 304 in the following way.

First content of the document area in the target document is obtained based on the first editing information in a case where first confirmation operation on the first editing information is detected.

The first confirmation operation can be performed on the first editing information by the user creating the target document or the first user. The first confirmation operation can indicate that the user creating the target document or the first user allows the content of the document area to be adjusted to the first editing information.

Second content of the document area in the target document is obtained based on the third editing information in a case where third confirmation operation on the third editing information is detected.

The third confirmation operation can be performed on the third editing information by the user creating the target document or the first user. The third confirmation operation can indicate that the user creating the target document or the first user allows the content of the document area to be adjusted to the third editing information.

The edited document of the target document is generated according to the first content and the second content.

It can be understood that in the alternative implementations, by performing the first confirmation operation or the third confirmation operation, the user (for example, the user creating the target document or the first user) can choose to adjust the content of the document area to the first editing information or the third editing information.

As an example, reference is made to FIG. 3B. The collaborator (that is, the first user) of the collaboration space can create the "parallel space" of the collaboration space, and content edited and modified in the parallel space can be used as an alternative of the collaboration space. When approval to content of the collaboration space and its parallel space is simultaneously initiated to an editor (that is, the user creating the target document) of an original document (that is, the target document), content of only one of the collaboration space and the parallel space (that is, the first editing information or the third editing information) can be selected for approval. The content of the collaboration space and its parallel space can be updated continuously, and the updated content needs to be approved again before the original document can be modified.

In the method for document collaboration provided in the embodiment of the present disclosure, the target document is updated by determining editing information from the editing information generated in the collaboration space and its parallel space, thereby improving the efficiency of document editing and management.

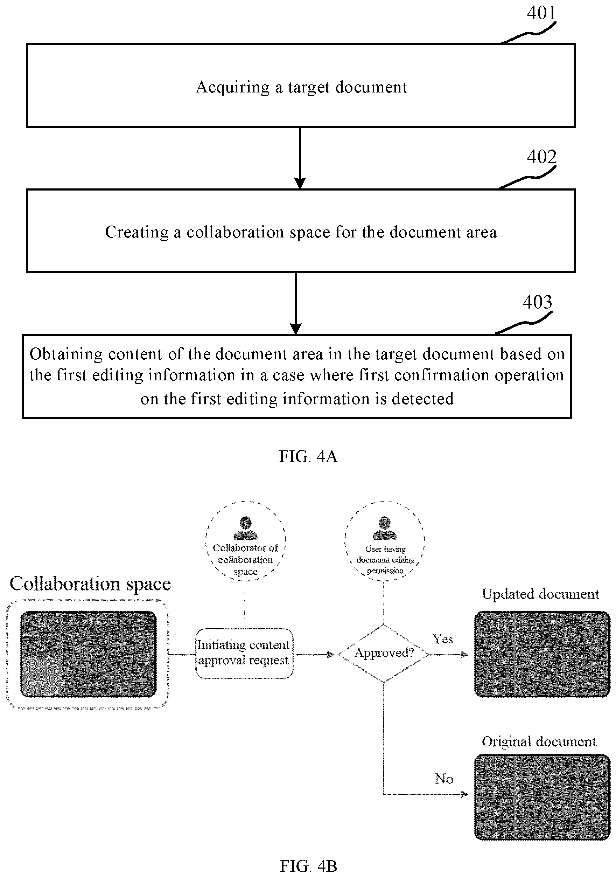

FIG. 4A is a flowchart of a method for document collaboration according to still another embodiment of the present disclosure. As shown in FIG. 4A, the method specifically includes steps 401 to 403.

At step 401, a target document is acquired.

In the embodiment of the present disclosure, an execution subject (a server, a terminal device, an apparatus for document collaboration, etc.) of the method for document collaboration can acquire the target document.

The target document includes a document area.

In the embodiment of the disclosure, the step 401 is substantially the same as the step 101 in the corresponding embodiment of FIG. 1A, which will not be repeated here.

At step 402, a collaboration space for the document area is created.

In the embodiment of the disclosure, the execution subject can create the collaboration space for the document area.

In the embodiment of the disclosure, the step 402 is substantially the same as the step 102 in the corresponding embodiment of FIG. 1A, which will not be repeated here.

At step 403, content of the document area in the target document is obtained based on the first editing information in a case where first confirmation operation on the first editing information is detected.

In the embodiment of the present disclosure, the execution subject can obtain content of the document area in the target document based on the first editing information in a case where first confirmation operation on the first editing information is detected.

The first editing information is determined through the collaboration space. For example, the first editing information may be text input by a user (e.g., the first user) through the collaboration space.

The first confirmation operation is performed by the first user or the user creating the target document. The first confirmation operation indicates that the first user or the user creating the target document allows the document area to be adjusted to the first editing information.

As an example, as shown in FIG. 4B, it is possible to select whether to update the document content modified in the collaboration space to the original document (i.e. the target document). Here, content edited in the collaboration space may not take effect in the document immediately, and can only be updated in the original document after it has been approved by a document creator (that is, the user creating the target document) or a user with editing permission (that is, the first user). In addition, the collaborator in the collaboration space (that is, the first user) can continue to create sub-spaces. Similarly, a creator of the sub-space (i.e. the collaborator) can designate a collaborator (i.e. the second user) and permission (i.e. second editing permission or read-only permission) of the sub-space; and content edited in the sub-space will not take effect immediately in a collaboration space at an upper level, and can be updated in the collaboration space only after it has been approved by a space collaborator (that is, the first user).

In the method for document collaboration provided in the embodiment of the present disclosure, the target document area is adjusted to the first editing information in a case where the first confirmation operation on the first editing information is detected, but not adjusted to the first editing information if the first confirmation operation on the first editing information is not detected. Therefore, the target document area in the target document can be adjusted to the first editing information after approval by the user, thus avoiding frequent adjustment of the content of the target document.

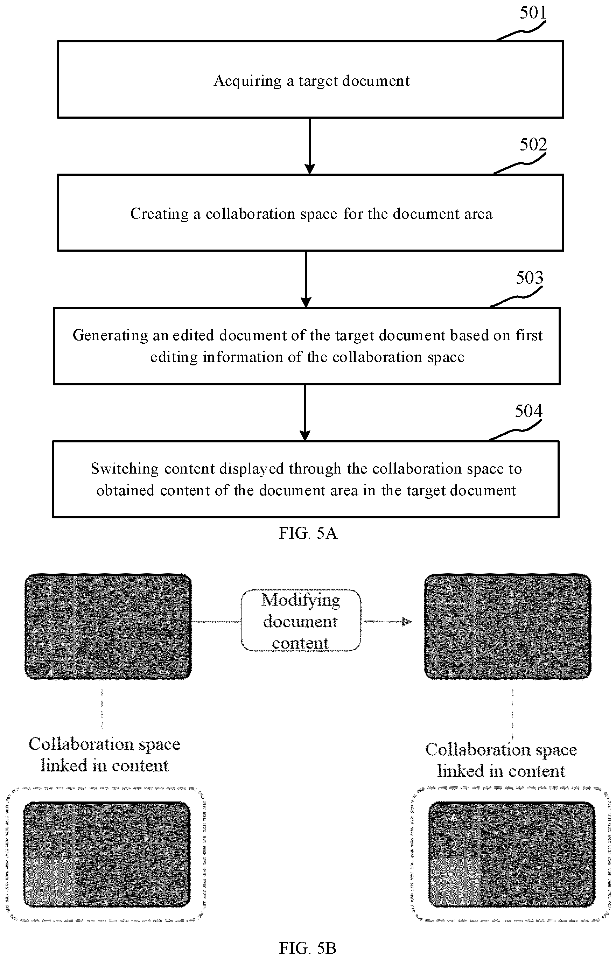

FIG. 5A is a flowchart of a method for document collaboration according to still another embodiment of the present disclosure. As shown in FIG. 5A, the method specifically includes steps 501 to 504.

At step 501, a target document is acquired.

In the embodiment of the present disclosure, an execution subject (a server, a terminal device, an apparatus for document collaboration, etc.) of the method for document collaboration can acquire the target document.

The target document includes a document area.

In the embodiment of the disclosure, the step 501 is substantially the same as the step 101 in the corresponding embodiment of FIG. 1A, which will not be repeated here.

At step 502, a collaboration space for the document area is created.

In the embodiment of the disclosure, the execution subject can create the collaboration space for the document area.

In the embodiment of the disclosure, the step 502 is substantially the same as the step 102 in the corresponding embodiment of FIG. 1A, which will not be repeated here.

At step 503, an edited document of the target document is generated based on first editing information of the collaboration space.

In an embodiment of the present disclosure, the execution subject may generate the edited document of the target document based on the first editing information of the collaboration space.

The first editing information is determined through the collaboration space.

In the embodiment of the disclosure, the step 503 is substantially the same as the step 103 in the corresponding embodiment of FIG. 1A, which will not be repeated here.

At step 504, content displayed through the collaboration space is switched to obtained content of the document area in the target document.

In the embodiment of the present disclosure, the execution subject can switch content displayed through the collaboration space to obtained content of the document area in the target document.

In some alternative implementations of this embodiment, the content displayed through the collaboration space can only be approved and switched to the obtained content of the document area in the target document after being confirmed by the first user and the user creating the target document. However, if it is not confirmed by at least one of the first user and the user creating the target document, adjustment may not be made, and thus one of the first user and the user creating the target document can flexibly determine whether to make above content adjustment.

As an example, reference is made to FIG. 5B. Content of the document can be extracted and shared with a designated person in a form of the collaboration space.

Here, it is necessary to set the main document (that is, the target document) and the collaboration space document to be linked in content (that is, the content displayed through the collaboration space is switched to the obtained content of the document area in the target document). After confirmation by both a main document editor (that is, the user creating the target document) and a collaboration space editor (that is, the first user), a main document and a collaboration space document can be set to be linked in content. If coverage of the collaboration space in the main document is modified, modified content will be automatically linked to a designated collaboration space, that is, the content displayed through the collaboration space is switched to the obtained content of the document area in the target document.

If content edited in the main document is outside the collaboration space, the content of the collaboration space will not be updated.

If the main document is not set to be linked in content, the edited content needs to be synchronized to the collaboration space manually.

According to the method for document collaboration provided in the embodiment of the present disclosure, all or part of the content of the target document can be shared with a designated person (for example, the first user) to view in a form of the collaboration space, and the content displayed through the collaboration space is switched to the obtained content of the document area in the target document, so that after the content of the document area in the target document is adjusted, the first user can view the adjusted content without re-sharing and even re-generating a link of the collaboration space.

Exemplary description of the embodiment of the disclosure is made below with reference to FIGS. 1B, 3B, 4B and 5B, but it should be noted that the embodiment of the disclosure may have features described below, but the following description does not constitute limitation on the protection scope of the embodiment of the disclosure.

At present, the present collaboration function for a cloud document supports a plurality of persons to jointly edit a same document (such as the target document), but historical versions of comments and modifications are visible to all of collaborators (including the first user, the second user and the third user). In real work and life, different parts of a document may be edited by different teams, or some of sensitive data may need to be masked to different teams. At this time, it is necessary to re-create a version to share with others. If content of the original document is modified, a document shared with others also needs to be modified, and they cannot be linked.

In the above scenario, many draft versions need to be created for a finalized document before it can be finalized. In multiuser collaboration, all of draft versions are visible to all of collaborators, but it is impossible to compare and view difference between old and new documents at the same time.

Here, the collaboration space can be a virtual space divided for document editing, and this space needs to specify an editable range of the document (that is, the first editing permission) and users who can participate in collaboration and view (that is, the first users). A plurality of collaboration spaces can be designated for a same document. Compared with the "collaboration space", the sub-space can be understood as a collaboration space at a lower level than the collaboration space. The collaboration space can have a plurality of sub-spaces. Relative to the "collaboration space", the parallel space is in a parallel relationship with the collaboration space and has the same document editing scope as the collaboration space. When content of the collaboration space and content of the parallel space are overwritten to the original document, only one of them can be selected. The collaboration space can have a plurality of parallel spaces.

In practice, an editing process of the main document (that is, the target document) can be divided into a plurality of "collaboration spaces" (for example, by team), and different teams can edit or view different parts thereof, that is, operate in different "collaboration spaces". Finally, content completed in a plurality of the collaboration spaces can be merged into the main document for viewing. The original document (that is, the main document) is a main display carrier for sharing and reading. An editing task of the main document is completed in the "collaboration space". Here, the collaboration space uses a plurality of "parallel spaces" for managing and comparing various draft versions and finally selecting a final version. When it is necessary to share and display part (but not all) of content of the main document, it is not necessary to, and it can be shared a new "collaboration space" is created and set to be linked in content for sharing without copying the document.

Specifically, the above example can be applied to following scenarios.
Scenario 1: multi-person collaboration on a document in the form of collaboration space.
Sub-scenario 1: the collaboration space is created and the collaborator is designated (referring to FIG. 1B).

Here, a user with permission to edit the target document (hereinafter referred to as a user with editing permission) can create a collaboration space for the document (that is, the target document), and designate collaborators (that is, the first users) and permission (such as the first editing permission) in the collaboration space. If a collaborator with editing permission can participate in viewing and editing the content of the collaboration space (that is, content of the target document displayed through the collaboration space by setting the first editing permission), a read-only collaborator can only view the content of the collaboration space.

In addition, an area of the target document can be designated to create the collaboration space. For example, a page number in PowerPoint, a paragraph of text in a document or a page in a table can be selected, and content editing in the collaboration space can be only made for this designated area. A plurality of different collaboration spaces can be created for a document.

Sub-scenario 2: it is possible to select whether to update the document content modified in the collaboration space to the original document.

Here, content modified in the collaboration space may not take effect in the document immediately, and can only be updated in the original document after it has been approved by a document creator or a user with editing permission. In addition, the collaborator in the collaboration space (that is, the first user) can continue to create sub-spaces. Similarly, a creator of the sub-space (i.e. the collaborator) can designate a collaborator (i.e. the second user) and permission (i.e. second editing permission) of the sub-space; and content edited in the sub-space will not take effect immediately in a collaboration space at an upper level, and it can be updated in the collaboration space only after it is approved by a space collaborator (referring to FIG. 4B).

The collaborator of the collaboration space can create the "parallel space" of the collaboration space, and content edited and modified in the parallel space can be used as an alternative to the collaboration space. When approval to content of the collaboration space and its parallel space is simultaneously initiated to an editor of the original document, only content of one of the collaboration space and the parallel space (that is, the first editing information or the third editing information) can be selected for approval at most. The content of the collaboration space and its parallel space can be updated continuously, and the updated content needs to be approved again before the original document can be modified (referring to FIG. 3B).

Sub-scenario 3: it is possible to compare and view the content of the original document, the collaboration space and the parallel space and mark their difference.

When an request is initiated from the collaboration space and its parallel space, the content of the original document (that is, the content of the target document), the content of the collaboration space document (that is, the first editing information generated in the collaboration space) and the content of the parallel space document (that is, the third editing information generated in the parallel space) can be compared and viewed, and their difference can be intelligently identified and highlighted.

The user can compare and view a space document which they have permission over. If a cooperator of the collaboration space have permission on the original document at the same time, a designated element or page (that is, the document area selected by the selection operation) can be selected to view its content in different spaces (including the first editing information generated in the collaboration space, the second editing information generated in the sub-space, the third editing information generated in the parallel space and the pre-editing information of the document area), and the difference can be highlighted.

Scenario 2: documents can be extracted and shared with a designated person in a form of the collaboration space (referring to FIG. 5B).

Here, the main document and the collaboration space document need to be set to be linked in content. After being confirmed by both the main document editor (that is, the user creating the target document) and the collaboration space editor (that is, the first user), the main document and the collaboration space document can be set to be linked in content. If the coverage of the collaboration space in the main document is modified, modified content will be automatically linked to a designated collaboration space, that is, content displayed through the collaboration space of the target document may be synchronously adjusted with the content of the target document in the editing process.

If content modified in the main document is outside the collaboration space, the content of the collaboration space may not be updated.

If the main document is not set to be linked in content, the modified content needs to be synchronized to the collaboration space manually.

Scenario 3: the collaboration space is used to manage historical versions of the document for comparing and viewing.

Sub-scenario 1: n collaboration spaces are created as an nth historical version of the document.

The user creating the target document can create the collaboration space for the target document at the same time, and finish editing of the target document in the collaboration space. After editing the content, the target document is shared with a user who needs it for reading.

When the user creating the target document updates a second edition of the document, a collaboration space named "Second Edition" can be created and editing and updating of the target document can be completed in the collaboration space. After editing the content, it is requested to synchronously update to the target document, and an original user who can read it can view updated content without updating a document link.

Sub-scenario 2: effects of a page/content in different historical versions are compared and viewed.

When viewing content of this document, a user with permission to view the historical versions selects a page/content (that is, the document area selected by the selection operation) to view historical versions of this page/content, and highlights difference.

It can be understood that in the above example, concept of the "collaboration space" of the document is adopted, and the document editing process is divided by team, and different teams can edit or view different parts of the document. A problem that a plurality of versions of a same document need to be created for different teams and it is difficult to maintain and edit at the same time is solved. Problems of confidential data disclosure, collaboration interfering with irrelevant editing, data conflict in multiple editing, and the like are avoided, merging is facilitated to generate a final draft, and efficiency in document editing and managing is improved.

It should be noted that the first user, the second user and the third user described in the above embodiments of the disclosure each refer to a type of users. Specifically, the first user is a user who has permission (such as the read-only permission or the first editing permission) to operate the document area through the collaboration space. The second user is a user who has permission to operate the sub-area through the sub-space (for example, the read-only permission or the second editing permission). The third user is a user who has permission to operate the document area through the parallel space (such as the read-only permission or the first editing permission). The first user, the second user and the third user each may include one or more specific users.

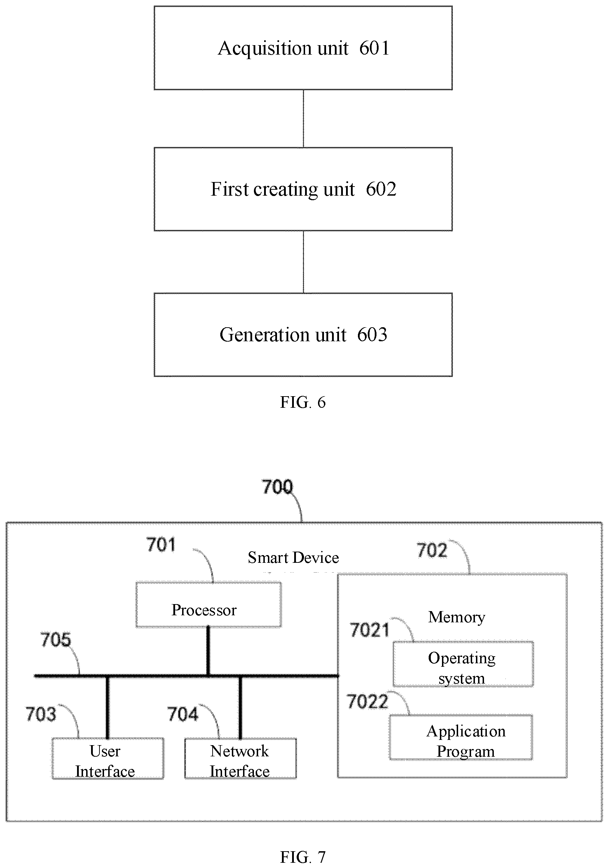

FIG. 6 is a structure diagram of an apparatus for document collaboration according to an embodiment of the present disclosure, which specifically includes an acquisition unit 601, a first creating unit 602 and a generation unit 603.

The acquisition unit 601 is configured to acquire a target document, and the target document includes a document area.

The first creating unit 602 is configured to create a collaboration space for the document area.

The generation unit 603 is configured to generate an edited document of the target document based on first editing information of the collaboration space, and the first editing information is determined through the collaboration space.

In an apparatus of an embodiment of the present disclosure, the first creating unit 602 is configured to:
establish an association relationship between the document area and a first user to create the collaboration space for the document area, the first user having operation permission on the document area.

In an apparatus of an embodiment of the present disclosure, the operation permission includes first editing permission to edit the document area through the collaboration space, and the first editing information is information generated by the first user through the first editing permission.

In an apparatus of an embodiment of the present disclosure, the generation unit 603 is configured to:
obtain content of the document area in the target document based on the first editing information in a case where the first confirmation operation on the first editing information is detected.

In an apparatus of an embodiment of the present disclosure, the document area includes a sub-area; and
the apparatus further includes a second creating unit (not shown) and a first determination unit (not shown).

The second creating unit is configured to create a sub-space for the sub-area.

The first determination unit is configured to determine the first editing information of the collaboration space based on second editing information of the sub-space, and the second editing information is determined through the sub-space.

In an apparatus of an embodiment of the present disclosure, the second creating unit is configured to:
establish an association relationship between the sub-area and a second user to create the sub-space for the sub-area, in which the second user has read-only permission or second editing permission on the sub-area and the second editing permission is permission to edit the sub-area through the sub-space; and
the second editing information is information generated by the second user through the second editing permission in a case where the second user has the second editing permission.

In an apparatus of an embodiment of the present disclosure, the first determination unit 602 is configured to:
obtain content of the sub-area in the collaboration space based on the second editing information in a case where second confirmation operation on the second editing information is detected.

In an apparatus of an embodiment of the present disclosure, the apparatus further includes:
a third creating unit (not shown) configured to create a parallel space for the document area; and
the generation unit 603 configured to: generate the edited document of the target document based on the first editing information of the collaboration space and third editing information of the parallel space, and the third editing information is determined through the parallel space.

In an apparatus of an embodiment of the present disclosure, the third creating unit is configured to:
establish an association relationship between the document area and a third user to create the parallel space for the document area.

In an apparatus of an embodiment of the present disclosure, in a case where the creating the collaboration space for the document area includes the establishing the association relationship between the document area and the first user, the third user and the first user creating the parallel space corresponding to the third user have the same permission on the document area, and the same permission is read-only permission or first editing permission.

In an apparatus of an embodiment of the present disclosure, the generation unit 603 is configured to:
obtain first content of the document area in the target document based on the first editing information in a case where first confirmation operation on the first editing information is detected;
obtain second content of the document area in the target document based on the third editing information in a case where third confirmation operation on the third editing information is detected; and
generate the edited document of the target document according to the first content and the second content.

In an apparatus of an embodiment of the present disclosure, the apparatus further includes:
an adjusting unit (not shown) configured to switch content displayed through the collaboration space to obtained content of the document area in the target document.

In an apparatus of an embodiment of the present disclosure, the apparatus further includes:
a first display unit (not shown) configured to display target content in a case where a consulting request is detected and a user initiating the consulting request has corresponding read-only permission, in which
in a case where the consulting request indicates consulting content of a document area corresponding to the collaboration space, the target content is the content of the document area corresponding to the collaboration space;
in a case where the consulting request indicates consulting content of a sub-area corresponding to the sub-space, the target content is the content of the sub-area corresponding to the sub-space; and
in a case where the consulting request indicates consulting content of a document area corresponding to the parallel space, the target content is the content of the document area corresponding to the parallel space.

In an apparatus of an embodiment of the present disclosure, the apparatus further includes a second determination unit (not shown) and a second display unit (not shown).

The second determination unit (not shown) is configured to determine the historical versions of the document area selected by the selection operation and mark differences between the historical versions in a case where selection operation on the document area in the target document is detected, and each of the historical versions includes the first editing information, the second editing information, the third editing information and pre-editing information of the document area.

The second display unit is configured to display the historical versions and the differences.

In an apparatus of an embodiment of the present disclosure, the generation unit 403 is configured to:
in a case where there is an intersection area between at least two document areas corresponding to at least two collaboration spaces, determine the number of target collaboration spaces where a content segment of the intersection area is edited;
in a case where the number is one, determine the content segment edited through the target collaboration space as the content of the edited document of the target document; and
in a case where the number is greater than one, determine content segment selected by a user creating the target collaboration spaces and edited through a single target collaboration space as the content of the edited document of the target document.

The apparatus for document collaboration provided in this embodiment may be an apparatus for document collaboration as shown in FIG. 6, and may execute all steps of the method for document collaboration as shown in FIGS. 1A to 5B, so as to achieve technical effect of the method for document collaboration as shown in FIGS. 1A to 5B, which can be referred to related description of FIGS. 1A to 5B for details and is not repeated here for brevity.

FIG. 7 is a structure diagram of an electronic device according to an embodiment of the present disclosure. The electronic device 700 shown in FIG. 7 includes at least one processor 701, a memory 702, at least one network interface 704 and other user interfaces 703. Various components in the electronic device 700 are coupled together by a bus system 705. It can be understood that the bus system 705 is configured to realize connection communication between these components. The bus system 705 includes a power bus, a control bus and a status signal bus in addition to a data bus. But for sake of clarity, various buses are all referred as the bus system 705 in FIG. 7.

The user interface 703 may include a display, a keyboard or a clicking device (such as a mouse, a trackball, a touch panel or a touch screen).

It can be understood that the memory 702 in the embodiment of the present disclosure may be a volatile memory or a nonvolatile memory, or may include both volatile and nonvolatile memories. The nonvolatile memory can be a read-only memory (ROM), a programmable read-only memory (PROM), an erasable programmable read-only memory (EPROM), an electrically erasable programmable read-only memory (EEPROM), or a flash memory. The volatile memory may be a random consulting memory (RAM), which is used as an external cache. By way of example, but not limitation, many forms of RAM are available, such as a static random consulting memory (SRAM), a dynamic random consulting memory (DRAM), a synchronous DRAM (SDRAM), a double data rate SDRAM (DDRSDRAM), an enhanced SDRAM (ESDRAM), a synch link DRAM (SLDRAM) and a direct Rambus RAM (DRRAM). The memory 702 described herein is intended to include, but is not limited to, these and any other suitable types of memory.

In some embodiments, the memory 702 stores following elements, executable units or data structures, or subsets thereof, or extended sets thereof: an operating system 7021 and an application program 7022.

The operating system 7021 includes various system programs, such as a framework layer, a core library layer and a driver layer, which are used to realize various basic services and to handle hardware-based tasks. The application program 7022 includes various application programs, such as a Media Player and a Browser, which are used to realize various application services. An application program for implementing the method of the embodiment of the present disclosure may be included in the application program 7022.

In the embodiment of the disclosure, by calling programs or instructions stored in the memory 702, specifically, programs or instructions stored in the application program 7022, the processor 701 is configured to perform steps of the method according to the method embodiments, which for example include:
acquiring a target document, the target document including a document area;
creating a collaboration space for the document area; and
generating an edited document of the target document based on first editing information of the collaboration space, the first editing information being determined through the collaboration space.
In a method of an embodiment of the present disclosure,
the creating the collaboration space for the document area includes:
   establishing an association relationship between the document area and a first user to create the collaboration space for the document area, the first user having operation permission on the document area.

In a method of an embodiment of the present disclosure, the operation permission includes first editing permission to edit the document area through the collaboration space, and the first editing information is information generated by the first user through the first editing permission.

In a method of an embodiment of the present disclosure, the generating the edited document of the target document based on the first editing information of the collaboration space includes:
obtaining content of the document area in the target document based on the first editing information in a case where the first confirmation operation on the first editing information is detected.

In a method of an embodiment of the present disclosure, the document area includes a sub-area; and the method further includes: after the creating the collaboration space for the document area, creating a sub-space for the sub-area; and
determining the first editing information of the collaboration space based on second editing information of the sub-space, the second editing information being determined through the sub-space.

In a method of an embodiment of the present disclosure, the creating the sub-space for the sub-area includes:
establishing an association relationship between the sub-area and a second user to create the sub-space for the sub-area, in which the second user has read-only permission or second editing permission on the sub-area and the second editing permission is permission to edit the sub-area through the sub-space, the second editing information being information generated by the second user through the second editing permission in a case where the second user has the second editing permission.

In a method of an embodiment of the present disclosure, the determining the first editing information of the collaboration space based on the second editing information of the sub-space includes:
obtaining content of the sub-area in the collaboration space based on the second editing information in a case where second confirmation operation on the second editing information is detected.

In a method of an embodiment of the present disclosure, the method further includes: after the creating the collaboration space for the document area,
creating a parallel space for the document area; and
the generating the edited document of the target document based on the first editing information of the collaboration space includes: generating the edited document of the target document based on the first editing information of the collaboration space and third editing information of the parallel space, the third editing information being determined through the parallel space.

In a method of an embodiment of the present disclosure, the creating the parallel space for the document area includes:
establishing an association relationship between the document area and a third user to create the parallel space for the document area.

In a method of an embodiment of the present disclosure, in a case where the creating the collaboration space for the document area includes the establishing the association relationship between the document area and the first user, the third user and the first user creating the parallel space corresponding to the third user have the same permission on the document area, and the same permission is read-only permission or first editing permission.

In a method of an embodiment of the present disclosure, the generating the edited document of the target document based on the first editing information of the collaboration space and the third editing information of the parallel space includes:
obtaining first content of the document area in the target document based on the first editing information in a case where first confirmation operation on the first editing information is detected;
obtaining second content of the document area in the target document based on the third editing information in a case where third confirmation operation on the third editing information is detected; and
generating the edited document of the target document according to the first content and the second content.

In a method of an embodiment of the present disclosure, the method further includes:
switching content displayed through the collaboration space to obtained content of the document area in the target document.

In a method of an embodiment of the present disclosure, the method further includes:
displaying target content in a case where a consulting request is detected and a user initiating the consulting request has corresponding read-only permission, in which
in a case where the consulting request indicates consulting content of a document area corresponding to the collaboration space, the target content is the content of the document area corresponding to the collaboration space;
in a case where the consulting request indicates consulting content of a sub-area corresponding to the sub-space, the target content is the content of the sub-area corresponding to the sub-space; and
in a case where the consulting request indicates consulting content of a document area corresponding to the parallel space, the target content is the content of the document area corresponding to the parallel space.

In a method of an embodiment of the present disclosure, the method further includes:
determining historical versions of the document area selected by the selection operation and marking differences between the historical versions in a case where selection operation on the document area in the target document is detected, each of the historical versions including the first editing information, the second editing information, the third editing information and pre-editing information of the document area; and
displaying the historical versions and the differences.

In a method of an embodiment of the present disclosure, the generating the edited document of the target document includes:
in a case where there is an intersection area between at least two document areas corresponding to at least two collaboration spaces, determining the number of target collaboration spaces where a content segment of the intersection area is edited;
in a case where the number is one, determining the content segment edited through the target collaboration space as the content of the edited document of the target document; and
in a case where the number is greater than one, determining content segment selected by a user creating the target collaboration spaces and edited through a single target collaboration space as the content of the edited document of the target document.

The method disclosed in the embodiment of the present disclosure can be applied to the processor 701 or implemented by the processor 701. The processor 701 may be an integrated circuit chip with signal processing capability. In an implementation process, steps of the above method can be completed by an integrated logic circuit of hardware or an instruction in a form of software in the processor 701. The processor 701 may be general processors, digital signal processors (DSPs), application specific integrated circuits (ASICs), field programmable gate arrays (FPGA) or other programmable logic devices, discrete gate or transistor logic devices, or discrete hardware components. The methods, steps and logic blocks disclosed in the embodiments of the present disclosure can be implemented or executed. The general processor can be a microprocessor or any conventional processor. Steps of the method disclosed in the embodiment of the present disclosure can be directly embodied to be executed and completed by a hardware decoding processor, or to be executed and completed by a combination of hardware and software units in the decoding processor. Software units can be located in a random consulting memory, a flash memory, a read-only memory, a programmable read-only memory or an electrically erasable programmable memory, registers and other mature storage media in the art. The storage medium is located in the memory 702, and the processor 701 reads information in the memory 702 to complete steps of the above method in combination with its hardware.

It is understood that the embodiments described herein can be implemented in hardware, software, firmware, middleware, microcode or a combination thereof. For hardware implementations, the processing unit can be implemented in one or more specific integrated circuits (ASICs), Digital Signal Processing (DSPs), DSP devices (DSPDs), Programmable Logic Devices (PLDs), Field-Programmable Gate Arrays (FPGAs), general processors, controllers, microcontrollers, microprocessors, other electronic units for performing above functions of the present disclosure, or a combination thereof.

For software implementations, techniques described herein can be realized by units that perform functions described herein. Software codes can be stored in the memory and executed by the processor. The memory may be implemented in the processor or external to the processor.

The electronic device provided in this embodiment can be the electronic device shown in FIG. 7, and can execute all steps of the method for document collaboration as shown in FIGS. 1A to 5B, so as to achieve technical effect of the method for document collaboration as shown in FIGS. 1A to 5B, which can be referred to related description of FIGS. 1A to 5B for details and is not repeated here for brevity.

A storage medium (computer readable storage medium) is further provided in an embodiment of the disclosure. The storage medium herein stores one or more programs. The storage medium can include a volatile memory, such as a random consulting memory; the memory can also include a non-volatile memory, such as a read-only memory, a flash memory, a hard disk or a solid state hard disk; and the memory may also include a combination of the above types of memories.

When one or more programs in the storage medium can be executed by one or more processors, the method for document collaboration executed on the electronic device side can be implemented.

The processor is configured to execute a document editing program stored in the memory to realize following steps of the method for document collaboration executed on the electronic device side:
acquiring a target document, the target document including a document area;
creating a collaboration space for the document area; and
generating an edited document of the target document based on first editing information of the collaboration space, the first editing information being determined through the collaboration space.
In a method of an embodiment of the present disclosure,
the creating the collaboration space for the document area includes:
   establishing an association relationship between the document area and a first user to create the collaboration space for the document area, the first user having operation permission on the document area.

In a method of an embodiment of the present disclosure, the operation permission includes first editing permission to edit the document area through the collaboration space, and the first editing information is information generated by the first user through the first editing permission.

In a method of an embodiment of the present disclosure, the generating the edited document of the target document based on the first editing information of the collaboration space includes:
obtaining content of the document area in the target document based on the first editing information in a case where the first confirmation operation on the first editing information is detected.

In a method of an embodiment of the present disclosure, the document area includes a sub-area; and the method further includes: after the creating the collaboration space for the document area,
creating a sub-space for the sub-area; and
determining the first editing information of the collaboration space based on second editing information of the sub-space, the second editing information being determined through the sub-space.

In a method of an embodiment of the present disclosure, the creating the sub-space for the sub-area includes:
establishing an association relationship between the sub-area and a second user to create the sub-space for the sub-area, in which the second user has read-only permission or second editing permission on the sub-area and the second editing permission is permission to edit the sub-area through the sub-space; and
the second editing information is information generated by the second user through the second editing permission in a case where the second user has the second editing permission.

In a method of an embodiment of the present disclosure, the determining the first editing information of the collaboration space based on the second editing information of the sub-space includes:
obtaining content of the sub-area in the collaboration space based on the second editing information in a case where second confirmation operation on the second editing information is detected.

In a method of an embodiment of the present disclosure, the method further includes: after the creating the collaboration space for the document area,
creating a parallel space for the document area; and
the generating the edited document of the target document based on the first editing information of the collaboration space includes: generating the edited document of the target document based on the first editing information of the collaboration space and third editing information of the parallel space, the third editing information being determined through the parallel space.

In a method of an embodiment of the present disclosure, the creating the parallel space for the document area includes:
establishing an association relationship between the document area and a third user to create the parallel space for the document area.

In a method of an embodiment of the present disclosure, in a case where the creating the collaboration space for the document area includes the establishing the association relationship between the document area and the first user, the third user and the first user creating the parallel space corresponding to the third user have the same permission on the document area, and the same permission is read-only permission or first editing permission.

In a method of an embodiment of the present disclosure, the generating the edited document of the target document based on the first editing information of the collaboration space and the third editing information of the parallel space includes:
obtaining first content of the document area in the target document based on the first editing information in a case where first confirmation operation on the first editing information is detected;
obtaining second content of the document area in the target document based on the third editing information in a case where third confirmation operation on the third editing information is detected; and
generating the edited document of the target document according to the first content and the second content.

In a method of an embodiment of the present disclosure, the method further includes:
switching content displayed through the collaboration space to obtained content of the document area in the target document.

In a method of an embodiment of the present disclosure, the method further includes:
displaying target content in a case where a consulting request is detected and a user initiating the consulting request has corresponding read-only permission, in which
in a case where the consulting request indicates consulting content of a document area corresponding to the collaboration space, the target content is the content of the document area corresponding to the collaboration space;
in a case where the consulting request indicates consulting content of a sub-area corresponding to the sub-space, the target content is the content of the sub-area corresponding to the sub-space; and
in a case where the consulting request indicates consulting content of a document area corresponding to the parallel space, the target content is the content of the document area corresponding to the parallel space.

In a method of an embodiment of the present disclosure, the method further includes:
determining historical versions of the document area selected by the selection operation and marking differences between the historical versions in a case where selection operation on the document area in the target document is detected, each of the historical versions including the first editing information, the second editing information, the third editing information and pre-editing information of the document area; and
displaying the historical versions and the differences.

In a method of an embodiment of the present disclosure, the generating the edited document of the target document includes:
in a case where there is an intersection area between at least two document areas corresponding to at least two collaboration spaces, determining the number of target collaboration spaces where a content segment of the intersection area is edited;
in a case where the number is one, determining the content segment edited through the target collaboration space as the content of the edited document of the target document; and
in a case where the number is greater than one, determining content segment selected by a user creating the target collaboration spaces and edited through a single target collaboration space as the content of the edited document of the target document.

A person skilled in the art should further realize that units and algorithm steps of examples described in connection with the embodiments disclosed herein can be realized in electronic hardware, computer software or a combination thereof. In order to clearly illustrate interchangeability of hardware and software, components and steps of the examples have been generally described by function in the above description. Whether these functions are implemented in hardware or software depends on specific application and design constraints of the technical scheme. Skilled persons can use different methods to realize the described functions for each specific application, but this implementation should not be considered beyond the scope of the disclosure.

Steps of a method or algorithm described in combination with the embodiments disclosed herein may be implemented in hardware, a software module executed by a processor, or a combination thereof. The software module can be placed in a random access memory (RAM), an internal memory, a read-only memory (ROM), an electrically programmable ROM, an electrically erasable programmable ROM, a register, a hard disk, a removable disk, a CD-ROM, or any other forms of storage medium known in the art.

The above specific embodiments further explain purposes, technical schemes and beneficial effect of this disclosure in detail. It should be understood that the above only shows specific embodiments of this disclosure and is not intended to limit a protection scope of this disclosure. Any editing, equivalent substitution, improvement, or the like made within the spirit and principle of this disclosure should be included in the protection scope of this disclosure.

## Claims

1. A method for document collaboration, comprising:
acquiring a target document, the target document comprising a document area;
creating a collaboration space for the document area; and
generating an edited document of the target document based on first editing information of the collaboration space, the first editing information being determined through the collaboration space.

2. The method according to claim 1, wherein the creating the collaboration space for the document area comprises:
establishing an association relationship between the document area and a first user to create the collaboration space for the document area, wherein the first user has operation permission on the document area.

3. The method according to claim 2, wherein the operation permission comprises first editing permission to edit the document area through the collaboration space, and the first editing information is information generated by the first user through the first editing permission.

4. The method according to claim 1, wherein the generating the edited document of the target document based on the first editing information of the collaboration space comprises:
obtaining content of the document area in the target document based on the first editing information in a case where first confirmation operation on the first editing information is detected.

5. The method according to claim 1, wherein the document area comprises a sub-area; and the method further comprises: after the creating the collaboration space for the document area,
creating a sub-space for the sub-area; and
determining the first editing information of the collaboration space based on second editing information of the sub-space, the second editing information being determined through the sub-space.

6. The method according to claim 5, wherein the creating the sub-space for the sub-area comprises:
establishing an association relationship between the sub-area and a second user to create the sub-space for the sub-area, wherein the second user has read-only permission or second editing permission on the sub-area and the second editing permission is permission to edit the sub-area through the sub-space; and
the second editing information is information generated by the second user through the second editing permission in a case where the second user has the second editing permission.

7. The method according to claim 5, wherein the determining the first editing information of the collaboration space based on the second editing information of the sub-space comprises:
obtaining content of the sub-area in the collaboration space based on the second editing information in a case where second confirmation operation on the second editing information is detected.

8. The method according to claim 1, further comprising: after the creating the collaboration space for the document area,
creating a parallel space for the document area; and
the generating the edited document of the target document based on the first editing information of the collaboration space comprises:
generating the edited document of the target document based on the first editing information of the collaboration space and third editing information of the parallel space, the third editing information being determined through the parallel space.

9. The method according to claim 8, wherein the creating the parallel space for the document area comprises:
establishing an association relationship between the document area and a third user to create the parallel space for the document area.

10. The method according to claim 9, wherein in a case where the creating the collaboration space for the document area comprises establishing an association relationship between the document area and a first user, the third user and the first user creating the parallel space corresponding to the third user have same permission on the document area, the same permission being read-only permission or first editing permission.

11. The method according to claim 8, wherein the generating the edited document of the target document based on the first editing information of the collaboration space and the third editing information of the parallel space comprises:
obtaining first content of the document area in the target document based on the first editing information in a case where first confirmation operation on the first editing information is detected;
obtaining second content of the document area in the target document based on the third editing information in a case where third confirmation operation on the third editing information is detected; and
generating the edited document of the target document according to the first content and the second content.

12. The method according to any one of claims 1 to 11, further comprising:
switching content displayed through the collaboration space to obtained content of the document area in the target document.

13. The method according to any one of claims 1 to 11, further comprising:
displaying target content in a case where a consulting request is detected and a user initiating the consulting request has read-only permission, wherein
in a case where the consulting request indicates consulting content of the document area corresponding to the collaboration space, the target content is the content of the document area corresponding to the collaboration space;
in a case where the consulting request indicates consulting content of a sub-area corresponding to the sub-space, the target content is the content of the sub-area corresponding to the sub-space; and
in a case where the consulting request indicates consulting content of a document area corresponding to the parallel space, the target content is the content of the document area corresponding to the parallel space.

14. The method according to any one of claims 1 to 11, further comprising:
determining historical versions of the document area selected by the selection operation and marking differences between the historical versions in a case where selection operation on the document area in the target document is detected, each of the historical versions comprising first editing information, second editing information, third editing information and pre-editing information of the document area; and
displaying the historical versions and the differences.

15. The method according to any one of claims 1 to 11, wherein the generating the edited document of the target document comprises:
in a case where there is an intersection area between at least two document areas corresponding to at least two collaboration spaces, determining the number of target collaboration spaces where a content segment of the intersection area is edited;
in a case where the number is one, determining the content segment edited through the target collaboration space as content of the edited document of the target document; and
in a case where the number is greater than one, determining the content segment selected by a user creating the target collaboration spaces and edited through a single target collaboration space as content of the edited document of the target document.

16. An apparatus for document collaboration, comprising:
an acquisition unit configured to acquire a target document, the target document comprising a document area;
a first creating unit configured to create a collaboration space for the document area; and
a generation unit configured to generate an edited document of the target document based on first editing information of the collaboration space, the first editing information being determined through the collaboration space.

17. A computer-readable storage medium with a computer program stored thereon, wherein when the computer program is executed by a processor, the method according to any one of claims 1 to 15 is implemented.
